# EUROPÄISCHE PATENTSCHRIFT

(11) **EP 1 001 177 B1**
(45) Veröffentlichungstag und Bekanntmachung des Hinweises auf die Patenterteilung: **22.10.2003**
(21) Anmeldenummer: 99122111.0
(22) Anmeldetag: 05.11.1999
(51) Int. Cl.: F16B 11/00, F16B 5/00

(54) **Verbindung von zwei Bauteilen aus gleichen oder unterschiedlichen Materialien**
Connection of parts of the same or different material
La connection des éléments du même ou d'un outre matériau

(30) Priorität: 13.11.1998 DE 19852517
(43) Veröffentlichungstag der Anmeldung: 17.05.2000
(73) Patentinhaber: SIEMENS AKTIENGESELLSCHAFT, 80333 München (DE)
(72) Erfinder: Brause, Joachim, Dipl.-Ing., 47918 Tönisvorst (DE); Calomfirescu, Mikail, Dipl.-Ing., 45359 Essen (DE); Meyer, Gerd, Dr.-Ing., 51375 Leverkusen (DE); Treutler, Helmut, Dipl.-Ing., 47798 Krefeld (DE)

(56) Entgegenhaltungen:
- US-A- 4 281 943
- US-A- 5 343 666
- US-A- 5 664 900

## Beschreibung

Die Erfindung betrifft eine Verbindung von zwei langgestreckten Bauteilen, insbesondere von zwei Fahrzeugträgern, aus gleichen oder unterschiedlichen Materialien, wobei einander zugewandte Flächen dieser Bauteile durch einen Klebstoff gehalten sind.

Um eine modulare Bauweise realisieren zu können, ist eine Abkehr von der in vielen Anwendungsbereichen, beispielsweise im Schienenfahrzeugbau, üblichen Schweißtechnik wünschenswert bzw. erforderlich. Die Schweißtechnik lässt es außerdem in aller Regel nicht zu, Bauteile aus unterschiedlichen Materialien (z. B. Aluminium und Kunststoff) miteinander zu verbinden.

Zum Stand der Technik gehören weiter in vielen Anwendungsbereichen anzutreffende Klebeverbindungen, die jedoch im Vergleich zur Schweißtechnik eine geringere Festigkeit haben. Deshalb und bei für den Klebstoff ungünstigen Belastungsrichtungen sind Klebeverbindungen häufig nicht einsetzbar.

Durch die US-A-5 664 900 ist eine Verbindung von zwei Holz-Elementen bei der Produktion von Möbeln durch einen Dübel bekannt. Für das Befestigen des Dübels wird mit Hilfe eines speziellen Bohrwerkzeuges in jedem Holz-Element eine Sackbohrung geschaffen, die einen oberen zylindrischen Bereich und einen unteren konischen Abschnitt aufweist. Der mit axialen Schlitzen versehene Dübel wird durch einen im konischen Abschnitt der Sackbohrung angeordneten, ebenfalls konischen Stopfen radial aufgeweitet bis der Dübel gegen den konischen Abschnitt anliegt. Dieses Zusammenwirken des Dübels mit dem konischen Abschnitt der Sackbohrung kann durch Klebstoff unterstützt werden.

Der Erfindung liegt die Aufgabe zugrunde, mit Hilfe der Klebetechnik eine Verbindung von zwei langgestreckten Bauteilen zu schaffen, deren Dauerhaltbarkeit über die einer reinen Klebeverbindung wesentlich hinausgeht.

Diese Aufgabe wird erfindungsgemäß dadurch gelöst, dass eines der beiden Bauteile eine keilförmig gestaltete Nut aufweist, deren Öffnungsbreite schmaler ist als ihre Fußbreite, wobei das andere Bauteil mit zwei Stegen versehen ist, die in die Nut des einen Bauteils eingreifen und durch Aufspreizen der Stege in formschlüssiger Wirkverbindung mit den Seitenflächen der keilförmigen Nut stehen.

Vorteilhafte Ausgestaltungen der Erfindung sind in den Unteransprüchen angegeben.

Im weiteren wird die Erfindung anhand eines Ausführungsbeispiels näher erläutert, das in der Zeichnung prinzipartig dargestellt ist. Es zeigen
- Fig. 1: zwei zu verbindende Bauteile in perspektivischer Ansicht, und zwar vor dem Fügevorgang,
- Fig. 2: eine die Fig. 1 ergänzende Ansicht nach dem Fügevorgang,
- Fig. 3: die Seitenansicht zu Fig. 1,
- Fig. 4: die Seitenansicht zu Fig. 2,
- Fig. 5: den Schnitt nach der Linie A - A in Fig. 3,
- Fig. 6: den Schnitt nach der Linie A - A in Fig. 4,
- Fig. 7: den Schnitt nach der Linie B - B in Fig. 3,
- Fig. 8: den Schnitt nach der Linie B - B in Fig. 4.

Die durch Kaltfügetechnik zu verbindenden Bauteile 1 und 2 können aus gleichen Materialien - z. B. Aluminium - oder aus unterschiedlichen Materialien - z. B. Aluminium und Stahl oder Kunststoff - bestehen. Bei dem Bauteil 1 kann es sich um einen Längsträger eines Fahrzeugaufbaus handeln, wobei das Bauteil 2 einen senkrechten Träger verkörpern kann.

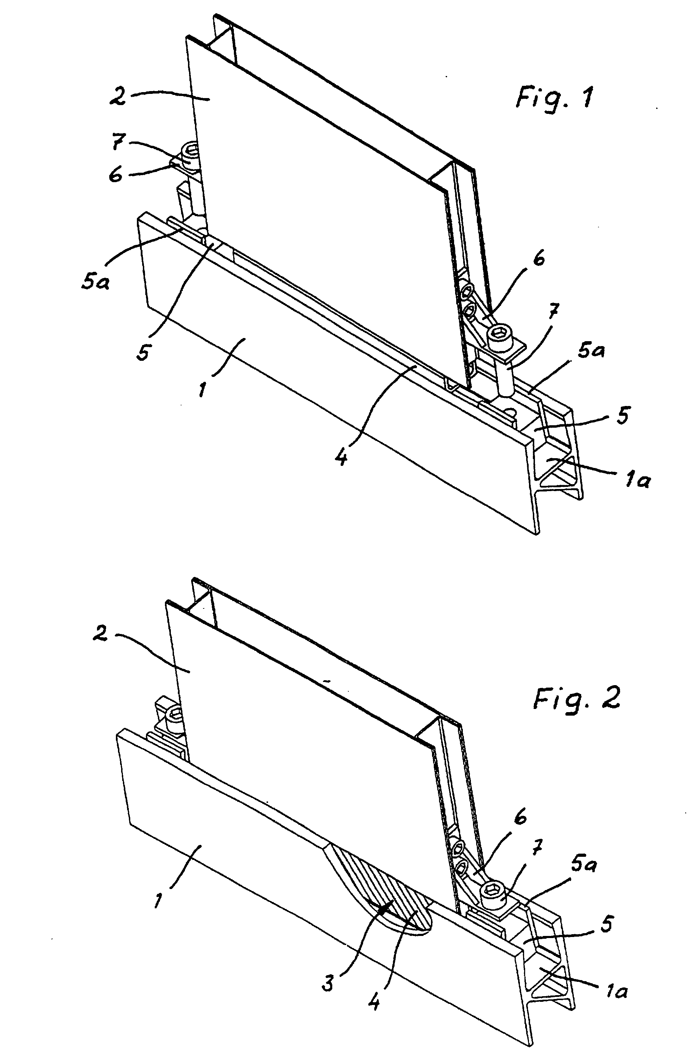

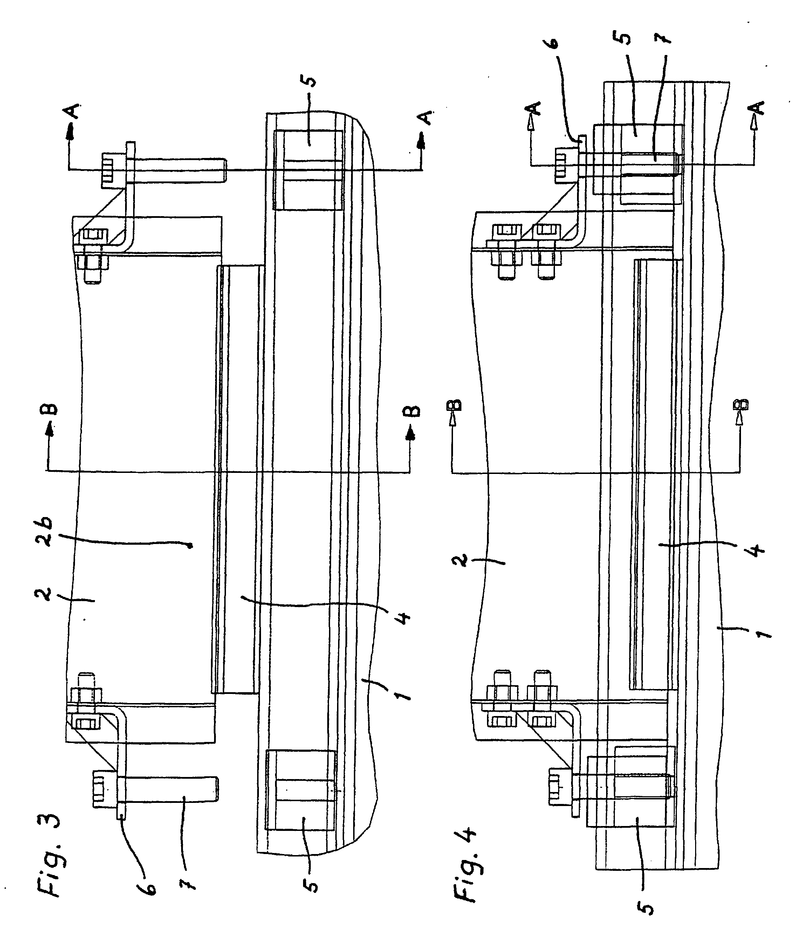

Vor dem Fügevorgang der Bauteile 1 und 2 wird Klebstoff 3 auf die Seitenflächen innerhalb einer keilförmig gestalteten Nut 1a des ersten Bauteils 1 aufgebracht, wobei die Öffnungsbreite der Nut 1a schmaler ist als ihre Fußbreite. Anschließend werden ein Spreizelement 4 sowie (als Werkzeug für das Fügen) Montagekeile 5 mit ergänzenden Beilagen 5a in die Nut 1a des ersten Bauteils 1 eingelegt. Alsdann wird das zweite Bauteil 2, an dem Montagewinkel 6 angeschraubt sind, in die Nut 1a eingeführt. Mit Hilfe von Montageschrauben 7 werden die Montagekeile 5 und die Montagewinkel 6 gegeneinander verspannt (siehe Fig. 1, 3, 5 und 7) bis die in den Fig. 2, 4, 6 und 8 dargestellte gefügte Stellung erreicht ist.

Während des Verspannens werden die im geschlitzten Endbereich 2b des zweiten Bauteil befindlichen Stege 2a durch das Spreizelement 4 aufgespreizt und zur Anlage an die mit dem Klebstoff 3 beschichteten Seitenflächen innerhalb der Nut 1a des ersten Bauteils 1 gebracht. Die beiden Bauteile 1 und 2 werden über die Montageschrauben 7 in ihrer gefügten Stellung gehalten bis der Klebstoff 3 ausgehärtet ist. Die einander zugewandten Flächen der Bauteile 1 und 2 sind dann durch den Klebstoff 3 großflächig vereinigt, der im übrigen eine abdichtende Funktion ausübt.

Nach dem Aushärten des Klebstoffs 3 werden die Montageschrauben 7 und die Montagekeile 5 mit ihren Beilagen 5a aus der Nut 1a des ersten Bauteils entfernt. Zuletzt wird der Montagewinkel 6 von dem zweiten Bauteil 2 abgeschraubt. Das Spreizelement 4, das Keilflächen mit im Bereich der Selbsthemmung liegender Neigung aufweisen kann, verbleibt zwischen den aufgespreizten Stegen 2a des zweiten Bauteils 2. Dadurch sind die beiden Bauteile 1 und 2 unter stabilem Formschluß vereinigt, unabhängig von der jeweiligen Klebeverbindung an ihren Kontaktflächen.

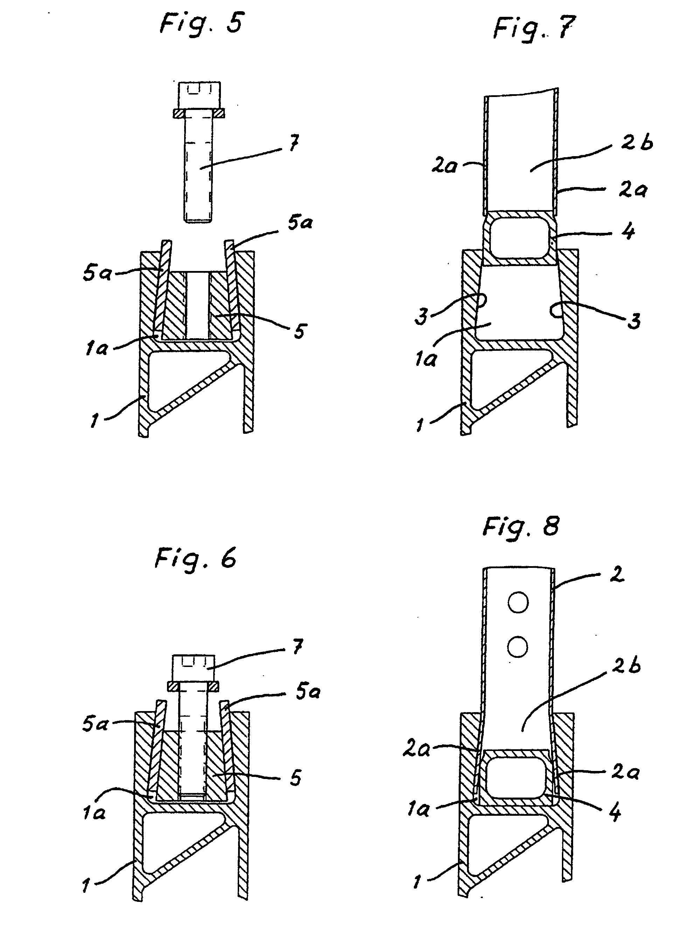

Eine nicht gezeichnete Alternative zu dem vorbeschriebenen Fügevorgang mit Hilfe von Montagekeilen 5, Montagewinkeln 6 und Montageschrauben 7 besteht darin, das Spreizelement 4 durch einen für hohe Drücke geeigneten Schlauchkörper zu ersetzen. Durch Einbringen eines Druckmediums in diesen Schlauch - siehe sinngemäß Fig. 8 - werden dann die beiden Stege 2a des zweiten Bauteils 2 aufgespreizt.

### Liste der Bezugszeichen

- 1: erstes Bauteil
- 1a: keilförmige Nut
- 2: zweites Bauteil
- 2a: Steg
- 2b: geschlitzter Endbereich
- 3: Klebstoff
- 4: Spreizelement
- 5: Montagekeil
- 5a: Beilage
- 6: Montagewinkel
- 7: Montageschraube

## Patentansprüche

1. Verbindung von zwei langgestreckten Bauteilen (1, 2), insbesondere von zwei Fahrzeugträgem, aus gleichen oder unterschiedlichen Materialien, wobei einander zugewandte Flächen dieser Bauteile (1, 2) durch einen Klebstoff (3) gehalten sind, **dadurch gekennzeichnet, dass** eines der beiden Bauteile (1) eine keilförmig gestaltete Nut (1a) aufweist, deren Öffnungsbreite schmaler ist als ihre Fußbreite, wobei das andere Bauteil (2) mit zwei Stegen (2a) versehen ist, die in die Nut (1a) des einen Bauteils (1) eingreifen und durch Aufspreizen der Stege (2a) in formschlüssiger Wirkverbindung mit den Seitenflächen der keilförmigen Nut (1a) stehen.

2. Verbindung nach Anspruch 1, **dadurch gekennzeichnet, daß** zwischen den beiden Stegen (2a) des zweiten Bauteils (2) ein Spreizelement (4) angeordnet ist.

3. Verbindung nach Anspruch 1 oder 2, **dadurch gekennzeichnet, daß** das Aufspreizen der Stege (2a) des zweiten Bauteils (2) mit Hilfe von Montageschrauben (7) erfolgt, die einerseits an lösbar mit dem zweiten Bauteil (2) verbundenen Montagewinkeln (6) und andererseits gegenüber dem ersten Bauteil (1) angreifen.

4. Verbindung nach Anspruch 3, **dadurch gekennzeichnet, daß** die Montageschrauben (7) an Montagekeilen (5) angreifen, die in der Nut (1a) des ersten Bauteils (1) fixiert sind.

## Claims

1. Connection of two elongate components (1, 2), in particular of two vehicle frame members, of identical or different materials, in which mutually facing surfaces of the components (1, 2) are held by a glue (3), **characterized in that** one of the two components (1) has a groove (1a) which is of wedge-shaped design, the width of the opening of which is narrower than the width of its base, the other component (2) being provided with two webs (2a) which engage in the groove (1a) of the one component (1) and, by expansion of the webs (2a), are actively connected in a form-fitting manner to the side surfaces of the wedge-shaped groove (1a).

2. Connection according to Claim 1, **characterized in that** an expanding element (4) is arranged between the two webs (2a) of the second component (2).

3. Connection according to Claim 1 or 2, **characterized in that** the expansion of the webs (2a) of the second component (2) takes place with the aid of mounting screws (7) which act, on the one hand, on angled mounts (6) connected releasably to the second component (2) and, on the other hand, relative to the first component (1).

4. Connection according to Claim 3, **characterized in that** the mounting screws (7) act on wedge-shaped mounts (5) which are fixed in the groove (1a) of the first component (1).

## Revendications

1. Assemblage de deux éléments (1, 2) oblongs, notamment de deux poutrelles de véhicule automobile, en le même matériau ou en des matériaux différents, des surfaces toumées l'une vers l'autre de ces éléments (1, 2) étant maintenus par une colle (3), **caractérisé en ce que** l'un des deux éléments (1) a une gorge (1a) cunéiforme dont la largeur d'ouverture est plus étroite que sa largeur de pied, l'autre élément (2) étant muni de deux réglettes (2a) qui pénètrent dans la gorge (1a) de l'élément (1) et qui, par écartement des réglettes (2a), viennent en coopération par complémentarité de forme avec les surfaces latérales de la gorge (1a) cunéiforme.

2. Assemblage suivant la revendication 1, **caractérisé en ce qu'**il est interposé un élément (4) d'écartement entre les deux réglettes (2a) du deuxième élément (2).

3. Assemblage suivant la revendication 1 ou 2, **caractérisé en ce que** l'écartement des réglettes (2a) du deuxième élément (2) s'effectue à l'aide de vis (7) de montage qui attaquent d'une part des équerres (6) de montage reliées au deuxième élément (2) et d'autre part le premier élément (1).

4. Assemblage suivant la revendication 3, **caractérisé en ce que** les vis (7) de montage attaquent des coins (5) de montage qui sont immobilisés dans la gorge (1a) du premier élément.
